(19) Europäisches Patentamt
European Patent Office
Office européen des brevets

(11) EP 1 120 440 B1

(12) EUROPÄISCHE PATENTSCHRIFT

(45) Veröffentlichungstag und Bekanntmachung des Hinweises auf die Patenterteilung:
**11.05.2005 Patentblatt 2005/19**

(51) Int Cl.[7]: **C08K 5/36**, C08G 75/00, C08L 21/00, C08G 75/16

(21) Anmeldenummer: **01100086.6**

(22) Anmeldetag: **11.01.2001**

# (54) Vulkanisationsmittel für ungesättigte Kautschukmischungen

Vulcanizing agents for unsaturated rubber compositions

Agents de vulcanisation pour des mélanges de caoutchouc insaturés

(84) Benannte Vertragsstaaten:
**DE FR GB IT**

(30) Priorität: **24.01.2000 DE 10002878**

(43) Veröffentlichungstag der Anmeldung:
**01.08.2001 Patentblatt 2001/31**

(73) Patentinhaber: **Bayer Aktiengesellschaft**
**51368 Leverkusen (DE)**

(72) Erfinder:
- **Weidenhaupt, Hermann-Josef, Dr.**
  **50259 Pulheim (DE)**
- **Buding, Hartmuth, Dr.**
  **52445 Titz (DE)**
- **Hahn, Josef, Prof. Dr.**
  **50996 Köln (DE)**
- **Runk, Marco**
  **50321 Brühl (DE)**

(56) Entgegenhaltungen:
**EP-A- 0 258 168**
**WO-A-94/12450**
**WO-A-99/48966**
**US-A- 2 989 513**
**US-A- 3 523 926**
**US-A- 3 544 492**

- **COLVIN H ET AL: "SCHWEFEL/OLEFIN-COPOLYMERE ALS VULKANISATIONSMITTEL FUER KAUTSCHUK" GUMMI, FASERN, KUNSTSTOFFE. INTERNATIONALE FACHZEITSCHRIFT FUR DIE POLYMER-VERARBEITUNG,DE,GENTNER VERLAG. STUTTGART, Bd. 50, Nr. 8, 1. August 1997 (1997-08-01), Seiten 627-634, XP000697954 ISSN: 0176-1625**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue polymere Schwefelverbindungen, deren Herstellung und Verwendung als Vulkanisationsmittel für ungesättigte Kautschukmischungen.

Das gebräuchlichste und im breitem Maß angewendete Vulkanisiermittel für ungesättigte Kautschuke, wie z. B. Naturkautschuk (NR), Isoprenkautschuk (IR), Butadienkautschuk (BR) und Styrol-Butadien-Kautschuk (SBR), ist Schwefel in elementarer Form. Bei der Herstellung von Weichgummi verwendet man ca. 0,25 bis 5,0 Gew.-Teile Schwefel, bezogen auf 100 Gew.-Teile Kautschuk. Die effektiv angewendete Menge an Schwefel ist abhängig von der gewählten Menge an Vulkanisationsbeschleuniger, was letztlich durch die gewünschten Vulkanisateigenschaften bestimmt wird.

Sehr häufig gebrauchte Vulkanisiersysteme sind das konventionelle und das semi-effiziente Vulkanisiersystem. Das konventionelle Vulkanisiersystem ist reich an Schwefel und arm an Vulkanisationsbeschleuniger, wohingegen das semi-effiziente Vulkanisiersystem eine mittlere Dosierung an Schwefel und Vulkanisationsbeschleuniger aufweist. Dem Fachmann sind die typischen Dosierungen bekannt. Sie sind z.B. beschrieben in W. Hofmann, Kautschuk-Technologie, Genter Verlag, Stuttgart, 1980, S. 64 und 254-255. Konventionelle Vulkanisiersysteme ergeben dynamisch gut belastbare Vulkanisate (flex life), wobei jedoch diese sehr alterungsund reversionsempfindlich sind. Semieffiziente Vulkanisiersysteme ergeben üblicherweise dynamisch weniger gut belastbare Vulkanisate (flex life), dafür sind sie aber etwas alterungs- und reversionsstabiler (vgl. R.N. Datta und W.F. Helt, Rubber World, August 1997, S. 24 ff).

Unter Reversion versteht man eine unter Temperatureinwirkung in Abwesenneit von Sauerstoff stattfindende Netzbrückenumlagerung, die zu einer Verschlechterung der Gebrauchseigenschaften des Vulkanisats führt und somit unerwünscht ist (anaerobe Alterung). Reversion findet unabdingbar einmal bei der Vulkanisation von sehr dicken und voluminösen Bauteilen statt, z.B. bei LKW-Reifen und Fender. Die physikalische Erklärung hierfür ist einfach: Wenn die innenliegenden Kautschukmischungsvolumina durch den über die heiße Vulkanisationsform eingebrachten Wärmefluss gerade richtig vulkanisiert sind, so sind die unmittelbar an der heißen Vulkanisationsform anliegenden Kautschukmischungsvolumina naturgemäß bereits übervulkanisiert. Zum anderen findet während des Gebrauchs dieser Gummiteile bei lang andauernder, intensiver dynamischer Belastung durch Hysterese (vgl. Walkarbeit des Reifens) eine Temperaturerhöhung (heat build-up) des Gummiteils statt, was eine Reversion des Vulkanisats nach sich zieht. Die Reversion kann in einem solchen Ausmaß stattfinden, dass sie sogar zur Zerstörung und damit zur Unbrauchbarkeit des Vulkanisats führt.

In den letzten Jahren wurden einige Reversionsschutzmittel-Spezialitäten bekannt, die die Reversion entweder durch Einbau von thermisch stabilen, praktisch nicht zur Reversion befähigten Netzbrücken minimieren (vgl. EP-A 530 590) oder die nach bereits erfolgter Reversion die gebrochenen, klassischen Netzstellen durch andere stabilere ersetzen (vgl. R.N. Datta und W.F. Helt, Rubber World, August 1997, S. 24 ff).

Kommerziell verfügbare Reversionsschutzmittel-Spezialitäten sind z.B. das Dinatriumsalz von Hexamethylen-1,6-dithiosulfat-dihydrat und 1,3-Bis(citraconimidomethyl)-benzol.

Allgemeiner Nachteil dieser kommerziellen Reversionsschutzmittel-Spezialitäten ist ihr relativ hoher Preis, der einmal durch nicht in großen Mengen verfügbaren Edukten sowie durch die schwierige und aufwendige Herstellung dieser Produkte bedingt ist, wodurch eine breite Anwendung in der unter stetigem Kostenreduzierungsdruck stehenden kautschukverarbeitenden Industrie, insbesondere in der Reifenindustrie, verhindert wird. Ein spezifischer Nachteil des Dinatrium-Hexamethylen-1,6-dithiosulfat-dihydrat ist seine aufwendige Lieferform. Aufgrund seines Salzcharakters muss es im Hinblick auf eine gute Einmischbarkeit sehr fein gemahlen werden, was andererseits wieder aus arbeitshygienischer Sicht eine Beölung des Pulvers zur Staubunterdrückung nach sich zieht.

Ein spezifischer Nachteil von 1,3-Bis(citraconimidomethyl)-benzol ist, dass es im Vulkanisat erst dann und nur dann wirksam werden kann, wenn bei dem mit Schwefel vernetzten ungesättigten Kautschuk die Reversion bereits eingesetzt hat und so konjugierte Olefine entstanden sind, die ihrerseits in einer Nachvernetzung mit dem Citraconderivat (via Diels-Alder-Reakion) zu einem neuen, jetzt aber andersartigen Netzwerk abreagieren können.

Ein Nachteil, der in den beschriebenen Vulkanisiermitteln der EP-A 530 590 gesehen werden kann, ist ihr hohes Molekulargewicht, verglichen mit der eigentlich vernetzend wirkenden Spezies.

In der Vergangenheit sind eine Vielzahl von Umsetzungsprodukten aus Olefinen und Schwefel bekannt geworden: So offenbart die EP-A 258 168 die Umsetzung von Olefinen mit Schwefel in Wasser, wobei Basen als Katalysatoren anwesend sein können. Als bevorzugte Olefine sind genannt Styrol, alpha-Methylstyrol, Cyclopentadien und Dicyclopentadien (Seite 4, Zeilen 14 und 15). In den erfindungsgemäßen Ausführungsbeispielen kommt Cyclopentadien defacto nicht vor. Auf Seite 7, Zeilen 57-58, und Seite 8, Zeilen 1-3, wird zum Thema industrielle Anwendbarkeit offenbart, dass die erfindungsgemäßen Vernetzungsmittel zu Vulkanisaten führen, die in ihren physikalischen Eigenschaften vergleichbar sind mit den Eigenschaften, die mit einem konventionellen Schwefelvernetzungssystem erhalten werden. Eine verbesserte Reversionsstabilität der erfindungsgemäßen Vulkanisate ist nicht bekannt geworden und auch nicht beschrieben. Eigene Versuche (vgl. Beispiel 1) haben ergeben, dass die erfindungsgemäßen Produkte aus

Dicyclopentadien und Schwefel Vulkanisate ergeben, die keine verbesserte Reversionsbeständigkeit erkennen lassen. Der besondere Vorteil der erfindungsgemäßen Vernetzungsmittel liegt aber darin, dass sie im Vergleich zu Schwefel nicht oder weniger ausblühen. Die Strukturen der erfindungsgemäßen Vulkanisiermittel sind beschrieben (vgl. H. Colvin und Ch. Bull, Gummi, Fasern, Kunststoffe 8 (1997) 627-634 bzw. Rubber Chemistry & Technology Vol. 68, Issue 5, Nov.-Dec. 1995, S. 746-756). Es handelt sich um Polymere aus Schwefel und polycyclischen Kohlenwasserstoffen. Diese Verbindungen sind strukturmäßig völlig verschieden von den Verbindungen der vorliegenden Erfindung.

Basierend auf der EP-A 258 168 werden in der WO-A 99/48966 Produkte aus Olefinen und Schwefel mit bestimmten Teilchendurchmessern beschrieben.

Die US-A 3 259 598 lehrt die Verwendung eines Produktes aus Schwefel, Leinöl und Styrol als Vulkanisiermittel für Kautschuk. Darüberhinaus offenbart die US-A 3 264 239 ein Vulkanisiermittel aus Schwefel, Leinöl und Dicyclopentadien.

Die US-A 3 523 926 offenbart Vulkanisiermittel aus Diolefinen, wie z.B. Cyclopentadien und Dicyclopentadien, und Schwefel mit Aminen als Katalysator. An keiner Stelle dieser Schrift wird die zusätzliche Anwendung von Schwefelwasserstoff beschrieben noch nahe gelegt.

Die US-A 2 989 513 offenbart Polymere aus Schwefel und einem Olefin zur Vulkanisation von Kautschuk. Als nützliche Olefine aus der Reihe der Cycloalkene werden in Spalte 3, Zeile 19, u. a. Cyclopenten und aus der Reihe der Polyolefine in Spalte 3, Zeile 21, u.a. Cyclopentadien genannt. Die erfindungsgemäße Reaktion wird bevorzugt zwischen 145° und 160°C durchgeführt. Die Ausführungsbeispiele umfassen nur Copolymeren aus Schwefel und Styrol bzw. aus Schwefel und Ethylen bzw. aus Schwefel und Isobutylen. An keiner Stelle dieser Schrift wird die zusätzliche Anwendung von Schwefelwasserstoff beschrieben noch nahe gelegt.

Die WO-A 94/12450 offenbart eine Methode zur Herstellung von schwefelhaltigen Verbindungen aus z.B. Alkenen, wie z.B. Hexadecen-1, Decen-1, Octadien-1,7, und Verbindungen der Formel $MHS_x$, worin M ein Kation, wie z.B. $Na^+$, $K^+$ oder $NH_4^+$, bedeutet. Die Verbindungen der Formel $MHS_x$ können als Vulkanisationsmittel für Kautschuk eingesetzt werden, wobei ein Lösungsmittel zum Einsatz kommt.

Es ist auch bekannt, Cyclopentadien mit Sulfanen zu Di-Cyclopentenylpolysulfanen umzusetzen.

Die üblicherweise in breitem Maße aus ungesättigten Kautschuken hergestellten Vulkanisate werden nur mit Schwefel und Beschleuniger als Vulkanisiermittel hergestellt, d.h. also ohne Agenzien, die die Reversion verhindern oder vermindern. Die Eigenschaften von klassisch mit konventionellen und semi-effizienten Vulkanisiersystemen hergestellten Kautschukvulkanisaten sind verbesserungswürdig. Es besteht somit ein Bedarf nach einem Vulkanisiermittel für ungesättigte Kautschuke, das überwiegend auf in großen Mengen verfügbaren Synthesebausteinen basiert, leicht zugänglich und damit wirtschaftlich herstellbar ist, und das den zum Ausblühen neigenden kristallinen Schwefel in einem Vulkanisiersystem ganz oder teilweise ersetzen kann und zu Vulkanisaten mit verbesserter Reversionsstabilität und niedrigerem heat build-up, insbesondere nach Überheizung führt.

Die Aufgabe wurde überraschenderweise gelöst durch Vulkanisation einer ungesättigten Kautschukmischung mit speziellen neuen polymeren Schwefelverbindungen.

Gegenstand der Erfindung sind daher neue polymere Schwefelverbindungen der Formel (I)

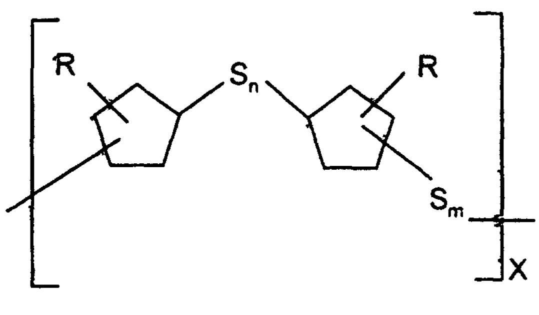

(I),

worin die Substituenten

R für Wasserstoff und/oder Methyl stehen, n und m ganze oder gebrochene Zahlen im Bereich von 2 bis 12, bevorzugt 2 bis 7, und x eine ganze oder gebrochene Zahl im Bereich vom 2 bis 500 bedeuten.

Ein weiterer Gegenstand der Erfindung ist die Herstellung der neuen polymeren Schwefelverbindungen der Formel (I) und deren Verwendung als Vulkanisiermittel für ungesättigte Kautschuke.

Die erfindungsgemäßen neuen polymeren Schwefelverbindungen der Formel (I) werden erhalten durch Umsetzung der an sich bekannten Di-Cyclopentenylpolysulfane der Formeln (II), (III) und/oder (IV)

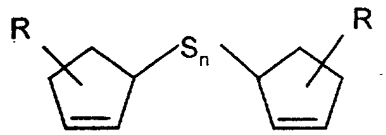

(II)

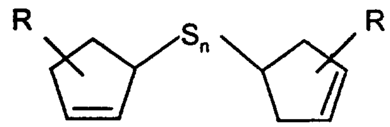

(III)

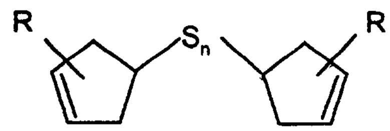

(IV),

worin R und n die in Formel (I) angegebene Bedeutung besitzen, mit Schwefel und Schwefelwasserstoff in Gegenwart von Aminen bei Temperaturen im Bereich von ca. 100° bis 180°C, bevorzugt bei 130° bis150°C.

Die Reaktionszeit beträgt üblicherweise ca. 0,5 bis 10 h, bevorzugt 3 bis 6 h.

Bei der erfindungsgemäßen Herstellung der polymeren Schwefelverbindungen beträgt das Molverhältnis der Di-Cyclopentenylpolysulfane der Formeln (II), (III) und/oder (IV) zu Schwefel 1:1 bis 1:9, bevorzugt 1:3 bis 1:5, das der Di-Cyclopentenylpolysulfane der Formeln (II), (III) und/oder (IV) zu Schwefelwasserstoff 2:1 bis 1:5, bevorzugt 1: 1 bis 1:2.

Als katalysierende Amine bei der Herstellung der erfindungsgemäßen neuen polymeren Schwefelverbindungen der Formel (I) aus den bekannten Di-Cyclopentenylpolysulfanen der Formeln (II), (III) und/oder (IV) kommen in Frage primäre, sekundäre und tertiäre aliphatische, cycloaliphatische, aromatische oder heterocyclische Amine oder Gemische hieraus. Bevorzugt sind sekundäre und tertiäre aliphatische Amine mit C1- bis C4-Alkylgruppen. Ganz besonders bevorzugt ist Triethylamin. Die Amine werden in einer Menge von ca. 0,001 bis 10 Gew.-Teilen, bevorzugt 0,1 bis 1,0 Gew.-Teilen, bezogen auf die Di-Cyclopentenylpolysulfanz der Formeln (II), (III) und/oder (IV) eingesetzt.

Die erfindungsgemäßen neuen polymeren Schwefelverbindungen der Formel (I) haben ein Glastemperatur $T_g$ (mid point) gemessen mittels DSC im Bereich von -70° bis +40°C, bevorzugt im Bereich von -40° bis +30°C.

Die Laufzahlen n und m der erfindungsgemäßen polymeren Schwefelverbindungen der Formel (I) sind typischerweise Mittelwerte einer Schwefelkettenlängenverteilung. Die Laufzahl x stellt typischerweise den mittleren Polymerisationsgrad dar.

Die erfindungsgemäßen neuen polymeren Schwefelverbindungen der Formel (I) sind üblicherweise löslich in Chloroform oder in einem Gemisch aus Chloroform und Kohlenstoffdisulfid, jedoch nimmt mit zunehmendem Molekulargewicht der polymeren Schwefelverbindungen die Löslichkeit in diesen Lösungsmitteln allmählich ab.

Die Herstellung der erfindungsgemäßen Di-Cyclopentenylpolysulfane der Formeln (II), (III) und/oder (IV) kann auf verschiedene Weise erfolgen und ist nicht auf ein spezielles Verfahren begrenzt.

Beispielsweise können die Di-Cyclopentenylpolysulfane der Formeln (II), (III) und/oder (IV) hergestellt werden aus Cyclopentadien und/oder Methylcyclopentadien und Sulfanen im Molverhältnis von 2:1 bis 10:1 in Lösungsmitteln, wie z.B. Benzol, Toluol oder Kohlenstoffdisulfid oder auch Gemischen hieraus, bei -20° bis 25°C, bevorzugt bei -10° bis 0°C. Bevorzugt wird die Reaktion mit Cyclopentadien und Sulfanen ohne Lösungsmittel durchgeführt. Die Sulfane können vorgelegt und dann die erfindungsgemäßen Cyclopentadiene zugegeben werden. Bevorzugt werden die Sulfane zu den erfindungsgemäßen Cyclopentadienen gegeben. Die Reaktionszeit beträgt ca. 0,5 bis 6 h, bevorzugt 1 bis 2 h. Überschüssige Cyclopentadiene und eventuell eingesetzte Lösungsmittel werden im Vakuum entfernt.

Die für die Erfindung geeigneten Sulfane haben die allgemeine Formel $H_2S_z$, wobei z gleich 2 bis 12, bevorzugt 2 bis 7, bedeutet. Die Laufzahl z kann eine ganze diskrete Zahl sein, typischerweise stellt sie jedoch das Zahlenmittel einer Schwefelkettenlängenverteilung dar und kann auch gebrochen sein. Die Herstellung der Sulfane ist nicht begrenzt und kann z.B. leicht aus Natriumpolysulfid und Salzsäure oder aus Schwefelwasserstoff und Dischwefeldichlorid hergestellt werden (vgl. hierzu F. Fehér in G. Bauer, Handbuch der Präparativen Anorganischen Chemie, Bd. 1, 3. Aufl., 1975-1981, Enke Verlag, Stuttgart, Seiten 362-364 und 368-369).

Eine weitere Möglichkeit zur Herstellung der erfindungsgemäßen Di-Cyclopentenylpolysulfane der Formeln (II), (III) und/oder (IV) besteht in der Umsetzung der erfindungsgemäßen Cyclopentadienen mit Schwefelwasserstoff zu (Methyl)Cyclopenten-2-thiol-(1) und anschließender Umsetzung mit elementarem Schwefel. Hierbei wird das (Methyl)Cyclopentadien zusammen mit flüssigem Schwefelwasserstoff im Molverhältnis von ca. 1:2 bis 1:200, bevorzugt 1:20 bis 1:50, in einem Autoklaven bei einer Temperatur von - 20° bis 50°C, bevorzugt 0° bis 25°C, vorgelegt und dann mit geeigneten Katalysatoren versetzt. Als geeignete Katalysatoren kommen in Frage: Brönstedsäuren und/oder Lewissäuren, wie z.B. Phosphorsäure, Perchlorsäure, Trifluormethansulfonsäure, Bortrifluoridetherat, und wasserfreies Aluminiumchlorid. Bei den Brönstedsäuren können auch Mischungen eingesetzt werden. Eine besonders bevorzugte Mischung besteht aus Phosphorsäure und Perchlorsäure im Gewichts-Verhältnis 1:2 bis 2:1. Die Katalysatoren werden in Mengen von ca. 0,01 bis 50 Gew.-Teilen, bevorzugt von 1,0 bis 10 Gew.-Teilen, bezogen auf (Methyl)Cyclopentadien, eingesetzt. Alternativ kann das (Methyl)Cyclopentadien auch zu einer Mischung aus flüssigem Schwefelwasserstoff und den Katalysatoren gegeben werden. Bevorzugt ist jedoch die Zugabe der Katalysatoren zur der Mischung aus dem (Methyl)Cyclopentadien und dem Schwefelwasserstoff.

Nach einer Reaktionszeit von etwa 0,5 bis 8 h, bevorzugt 2 bis 4 h, wird der überschüssige Schwefelwasserstoff entfernt und das erhaltene Thiol gegebenenfalls gereinigt, z.B. durch Destillation, und dann mit Schwefel im Molverhältnis von 2:1 bis 1:5, bevorzugt 1:1,5 bis 1:2,5, bei einer Temperatur von 0° bis 80°C, bevorzugt von 20° bis 40°C, mit Aminen als Katalysator umgesetzt. Als Amine kommen in Frage primäre, sekundäre und tertiäre Amine. Bevorzugt werden sekundäre und tertiäre aliphatische Amine mit C1- bis C4-Alkylresten eingesetzt. Besonders bevorzugt ist Triethylamin. Die Amine werden in Mengen von 0,001 bis 10 Gew.-Teilen, bevorzugt 0,1 bis 1,0 Gew.-Teilen, bezogen auf das Thiol eingesetzt.

Die erfindungsgemäßen neuen polymeren Schwefelverbindungen der Formel (I) können z.B. als Vulkanisationsmittel für ungesättigte Kautschukmischungen zur Herstellung von Gummi-Formkörpern, wie z.B. Schläuche, Dichtungen, Motorlager und Fender, insbesondere aber zur Herstellung von Reifenbauteilen, wie z.B. Laufflächen, Drahtkappen, Seitenteil- und Wulststreifen, Schulterpolster, Gürtelabdeckungen, Laufflächen-Unterplatten und Seitenwände eingesetzt werden.

Die Herstellung der erfindungsgemäßen Kautschukmischungen erfolgt in an sich bekannter Weise durch übliches Vermischen der ungesättigten Kautschukkomponenten mit den bekannten Zusätzen bzw. Zuschlagstoffen, wie Ruß, Kieselsäure, Weichmacher, Alterungsschutzmittel, Zinkoxid, Stearinsäure, Harz, Vearbeitungswirkstoff sowie dem Vulkanisiersystem bestehend aus den erfindungsgemäßen neuen polymeren Schwefelverbindungen und gegebenenfalls zusätzlich elementarem Schwefel.

Die erfindungsgemäßen neuen polymeren Schwefelverbindungen der Formel (I) können entweder bei der Herstellung der Grundmischung unter sorgfältigem Ausschluss einer Anvulkanisation eingesetzt werden oder bevorzugt bei der Herstellung der Fertigmischung zusammen mit den Vulkanisationsbeschleunigern und dem Schwefel, falls erwünscht.

Ungesättigte Kautschuke im Sinne der Erfindung sind z.B. Naturkautschuk (NR), Isoprenkautschuk (IR), Butadienkautschuk (BR) und Styrol-Butadien-Kautschuk (SBR), der nach dem Emulsionsverfahren als auch nach dem Lösungsverfahren hergestellt sein kann, Nitrilkautschuk (NBR), teilhydrierter Nitrilkautschuk (H-NBR) und Ethylen-Propylen-Dienkautschuk (EPDM). Gleich gute Ergebnisse werden auch mit Verschnitten dieser Kautschuke erhalten.

Die Anwendung der Ruße unterliegt keiner Einschränkung. Bevorzugt werden die in der kautschukverarbeitenden Industrie typischerweise angewendeten Ruße eingesetzt, wie z. B. aktive und halbaktive Ruße.

Die Anwendung der Kieselsäuren unterliegt ebenfalls keiner Einschränkung. Bevorzugt werden hochdisperse Kieselsäuren, hergestellt durch Fällung von Lösungen von Silikaten oder durch Flammhydrolyse von Siliciumhalogeniden. Die bevorzugten Kieselsäuren haben eine spezifische Oberfläche von 20 bis 400 $m^2/g$ (BET-Oberfläche) und eine Primärteilchengröße von 10 bis 400 nm.

Die erfindungsgemäßen neuen polymeren Schwefelverbindungen der Formel (I) werden in Mengen von 0,2 bis 10 Gew.-Teilen, bevorzugt in Mengen von 0,5 bis 6,0 Gew.-Teilen, eingesetzt, bezogen auf 100 Gew.-Teile Kautschuk. Sofern zusätzlich Schwefel eingesetzt werden soll, kommt der üblicherweise in der kautschukverarbeitenden Industrie verwendete Schwefel oder auch unlöslicher Schwefel in Frage. Die bevorzugte Menge an Schwefel beträgt 0,05 bis 1,5 Gew.-Teile, bevorzugt 0,1 bis 1,2 Gew.-Teile, bezogen auf 100 Gew.-Teile Kautschuk.

Selbstverständlich können anstelle des Schwefels auch die bekannten Schwefelspender, beispielsweise Caprolactamdisulfid, wie auch Abmischungen mit Schwefel eingesetzt werden. Die für den Verwendungszweck günstigste Menge an Schwefelspender kann durch Vorversuche leicht ermittelt werden.

Als Vulkanisationsbeschleuniger können die verschiedensten Typen eingesetzt werden und unterliegen keiner Einschränkung. Bevorzugt werden Mercaptobenzthiazol (MBT), Dibenzothiazyldisulfid (MBTS), Sulfenamide auf Basis von MBT, wie z.B. Benzothiazyl-2-cyclohexylsulfenamid (CBS), Benzothiazyl-2-dicyclohexylsulfenamid (DCBS), Benzothiazyl-2-tert.-butylsulfenamid (TBBS) und Benzothiazyl-2-sulfenmorpholid (MBS) eingesetzt. Die Vulkanisationbeschleuniger werden in Mengen von 0,5 bis 3,0 Gew.-Teilen, bevorzugt in Mengen von 0,5 bis 2,5 Gew.-Teilen, bezogen auf 100 Gew.-Teile eingesetzten Kautschuk, eingesetzt. Es können aber auch Mischungen aus Vulkanisationsbeschleunigern eingesetzt werden, deren optimale Zusammensetzung hinsichtlich Typ und Menge leicht durch Versuche ermittelt werden kann.

Die Vulkanisation der erfindungsgemäßen Kautschukmischungen wird in bekannter Weise bei Temperaturen von ca. 120° bis 220°C, bevorzugt von 140° bis 180°C, durchgeführt.

## Beispiele

### Beispiel 1

Vergleichsbeispiel gemäß Beispiel 10 der EP-A 258 168

Es wurden 110,4 g (3,44 mol) Schwefelblüte, 19,5 g (0,15 mol) Dicyclopentadien, 5,2 g Calciumcarbonat-Pulver und 658,3 g Dispergierlösung, bestehend aus 8,3 g Carboxymethylcellulose und 650 g vollentsalztes Wasser, in einem 1,3 1-Autoklaven vorgelegt. Man spülte 3 mal mit 5 bar Stickstoff. Dann wurde der Reaktorinhalt unter Rühren auf 150°C aufgeheizt. Nach einer Reaktionszeit von 3 h bei 150°C wurde abgekühlt, entspannt und mit Stickstoff gespült. Das Reaktionsgemisch wurde entnommen. Der Feststoff wurde abfiltriert, mit vollentsalztem Wasser gewaschen und getrocknet. Laut HPLC-Untersuchung enthielt das Produkt 4,7 Gew.-Teile freien Schwefel.

Sodann wurde gemäß der Anleitung des nachstehenden Beispiels 5 und der in Tabelle 1 beschriebenen Testrezeptur eine Kautschukgrundmischung gefertigt, in die mit einer Walze 1,4 phr Beschleuniger CBS und 6 phr der hier synthetisierten Substanz, ohne weiteren Schwefelzusatz, eingemischt wurden. Die Rheometerprüfung (vgl. Erläuterungen zu den gummitechnologischen Prüfungen) bei 160°C/60 min lieferte einen Torque S' max von 23,4 dNm und eine Reversion von 51 %. Die entsprechende Kautschukvergleichsmischung, die als Vernetzungssystem nur 1,4 phr Beschleuniger CZ und 4,0 phr Schwefel enthielt, ergab in der Rheometerprüfung bei 160°C einen vergleichbaren Torque, nämlich S' max = 23,2 dNm. Die nach 1 h bestimmte Reversion lag jedoch bei nur bei 38 %.

Beurteilung: Der Vernetzer gemäß Beispiel 10 der EP-A 258 168 ergibt kein Vulkanisat mit verbessertem Reversionsverhalten im Vergleich zu traditionellen Vulkanisiermitteln.

### Beispiel 2

Herstellung von Sulfanen aus Schwefelwasserstoff und Dischwefeldichlorid

Alle Glasgeräte, die mit Sulfanen in Kontakt kommen, wurden sorgfältig entfettet und 1 h lang in konzentrierter Salzsäure ausgekocht.

470 g (14 mol) über Phosphorpentoxid getrockneter Schwefelwasserstoff wurden bei -78°C in ein geeignetes Gefäß einkondensiert. Anschließend wurde über Phosphorpentoxid getrocknetes Chlorwasserstoffgas bis zur Sättigung eingeleitet. Unter Beibehaltung der Kühlung wurden unter starkem Rühren innerhalb einer halben Stunde 250 g (1,5 mol) Dischwefeldichlorid aus einem mit einem Teflonhahn ausgestatteten Tropftrichter zugetropft. Es wurde 1 h nachgerührt und anschließend überschüssiger Schwefelwasserstoff verdampft. Zur vollständigen Entfernung des Schwefelwasserstoffs im Vakuum (1 mbar) wurde langsam bis auf Raumtemperatur erwärmt.
H-NMR ($C_6D_6$): mittlere Schwefelkettenlänge z = 5,7

### Beispiel 3

Herstellung von Di-Cyclopentenylpolysulfanen der Formeln (II), (III) und (IV) mit R=H

Für die Vorbehandlung der Glasgeräte galt das Gleiche wie bei der Herstellung der Sulfane in Beispiel 2 beschrieben.

In einem 250 ml-Rundkolben mit Magnetrührer wurden 33,6 g (0,182 mol) des in Beispiel 2 beschriebenen Sulfans in 30 ml Schwefelkohlenstoff gelöst und unter Rühren auf 0°C gekühlt. Sodann wurden 26,6 g (0,403 mol) frisch gereinigtes Cyclopentadien unter Rühren bei 0°C innerhalb 50 min zu dem gelösten Sulfan zugetropft.

Es wurde 3 h bei 0°C nachgerührt und dann langsam auf Raumtemperatur aufgewärmt. Die gelbe Lösung wurde durch Umkondensieren bei 20 mbar von Schwefelkohlenstoff und überschüssigem Cyclopentadien befreit. Zurück blieb eine gelbe, ölige Flüssigkeit.

| $C_{10}H_{14}S_{5,6}$ (MG: 313,76) | | |
|---|---|---|
| C ber.: 38,28%<br>C gef.: 38,6/38,5% | H ber.: 4,50%<br>H gef.: 4,6/4,6% | S ber.: 57,22%<br>S gef.: 57,7/57,7% |

| IR (Film) | ν = 3059 1/cm (m) |
|---|---|
| | ν = 1605 1/cm (w) |
| | ν = 737 1/cm (s) |

| MS | (EI, 20 eV, 65°C, Direkteinlass) |
|---|---|
| | $M^+$ (n = 2): 198 |
| | $M^+$ (n = 3): 230 |
| | $M^+$ (n = 4): 262 |
| | $M^+$ (n = 5): 294 |
| | $M^+$ (n = 6): 326 |

**Beispiel 4**

Herstellung der erfindungsgemäßen polymeren Schwefelverbindungen der Formel (I)

Ein mit Stickstoff inertisierter 1 1-Rührautoklav wurde nacheinander mit 57,57 g (1,796 mol) Schwefel, 190 g (0,599 mol) der in Beispiel 3 hergestellten Di-Cyclopentenylpolysulfane, 1,14 g Triethylamin und 28,5 g (0,836 mol) Schwefelwasserstoff beschickt. Unter Rühren heizte man auf 140°C auf. Nach 5 h Reaktionszeit wurde abgekühlt, entspannt und mit Stickstoff gespült. Als Reaktionsprodukt wurde ein zähes Öl erhalten, das in Chloroform oder Chloroform/Kohlenstoffdisulfid (10:1) vollständig löslich war.

| $(C_{10}H_{16}S_{9,5})_x$ (MG: $[440,81]_x$) | | |
|---|---|---|
| C ber.: 27,25%<br>C gef.: 27,2/27,3% | H ber.: 3,66%<br>H gef.: 3,6/3,6% | S ber.: 69,09%<br>S gef.: 68,6/69,4% |

| IR (Film) | ν = 1438 1/cm (s) |
|---|---|
| | ν = 1314 1/cm (m) |
| | ν = 1243 1/cm (m) |

DSC: Glastemperatur $T_g$ = -14,1°C mid point (Aufheizgeschwindigkeit: 5°C/min)

GPC: Lösemittel: Chloroform/Kohlenstoffdisulfid (10:1)

x = 2 bis 41 (Säule: Jordi Gel DVB, 500 Å, 500 x 10 mm, Eluent: Chloroform mit 0,5 Gew.-Teilen Ethanol, UV-Detektion: 260 nm, Retentionszeit: 11 bis 23 min)

NMR: $^1$H- und $^{13}$C-NMR ($CDCl_3/CS_2$ = 10:1)

Die typischen Bereiche der chemischen Verschiebung (ppm) bei 1,2-Substitution sind:

| 1,2-substituiert | | |
|---|---|---|
| 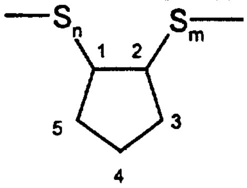 | | |
| Atom-Nr. | δ ($^{1}H$) | δ ($^{13}C$) |
| 1, 2 | 3,5 - 4,1 | 54,2 - 58,2 |
| 3, 5 | 1,9 - 2,4 | 30,0 - 34,1 |
| 4 | 1,5 - 1,9 | 21,7 - 24,4 |

Die typischen Bereiche der chemischen Verschiebung (ppm) bei 1,3-Substitution sind:

| 1,3-substituiert | | |
|---|---|---|
| 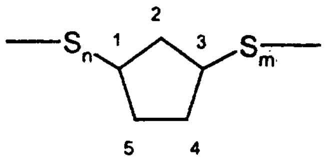 | | |
| Atom-Nr. | δ ($^{1}H$) | δ ($^{13}C$) |
| 1, 3 | 3,6 - 3,9 | 48,0 - 50,9 |
| 2 | 2,2 - 2,4 | 37,7 - 41,9 |
| 4, 5 | 1,8 - 2,4 | 30,0 - 34,1 |

<u>Erläuterungen zu den gummitechnologischen Prüfungen</u>

Folgende Testmethoden bzw. Testvorrichtungen wurden benützt: Rheometer: ASTM D 2084, Monsanto MDR 2000E. Zugversuch: DIN 53405, S2-Stab. Härte: DIN 53505. Rückprallelastizität: DIN 53512. Weiterreisswiderstand: DIN 53504. Viskoelastische Eigenschaften: DIN 53513/ISO 4664, Roelig-Test 10 Hz. Dynamische Eigenschaften: DIN 53533, Goodrich-Flexometer, 100°C/25 min, Vorspannung 1 MPa, Hub 4,45 mm.

**Beispiel 5**

Mit Hilfe eines Innenmischers vom Typ GK 1,5E der Firma Werner & Pfleiderer wurden bei einer Rotordrehzahl von 40 upm und einer Kammer- und Schaufeltemperatur von 50°C (Stempeldruck 8 bar, Füllgrad 65%) Testmischungen gemäß Tabelle 1 hergestellt.

Beschleuniger, Schwefel und die erfindungsgemäßen neuen polymeren Schwefelverbindungen wurden auf der Walze zugemischt. Die Mengenangaben stellen Gew.-Teile pro 100 Gew.-Teile Kautschuk dar.

Tabelle 1:

| Testrezeptur | | | |
|---|---|---|---|
| Mischungsnummer | Vergleich 1 | Erfindung 2 | Erfindung 3 |
| NR (TSR 5, Defo 1000) | 100 | 100 | 100 |
| Zinkoxid RS | 5 | 5 | 5 |
| Stearinsäure | 3 | 3 | 3 |
| Ruß N330 | 45 | 45 | 45 |
| 6PPD | 2 | 2 | 2 |
| Arom. Weichmacher | 5 | 5 | 5 |
| | | | |
| Schwefel | 1,35 | 0 | 0,3 |
| CBS | 1,4 | 1,4 | 1,4 |
| Polymere Schwefelverbindung gemäß Beispiel 4 (Erfindung) | 0 | 4 | 3 |

Tabelle 2:

| Rheometer-Daten | | | |
|---|---|---|---|
| Mischungsnummer | Vergleich 1 | Erfindung 2 | Erfindung 3 |
| 150°C/60 min | | | |
| t01 (min) | 3,2 | 2,7 | 2,7 |
| t90 (min) | 6,9 | 8,9 | 7,6 |
| S' max (dNm) | 13,9 | 14,2 | 14,1 |
| S' end (dNm) | 12,3 | 13,8 | 13,7 |
| Reversion (%) | 11,5 | 2,8 | 2,8 |
| 160°C/60 min | | | |
| t01 (min) | 1,8 | 1,6 | 1,5 |
| t90 (min) | 3,5 | 4,4 | 3,9 |
| S' max (dNm) | 12,9 | 13,1 | 13,0 |
| S' end (dNm) | 9,8 | 11,1 | 10,9 |
| Reversion (%) | 24,0 | 15,3 | 16,2 |

Die Reversion in % wurde aus den Rheometer-Daten wie folgt bestimmt:

$$(S'max - S'end) \times 1/S'max \times 100\ (\%)$$

Aus Tabelle 2 geht hervor, dass einmal die Mischungen gemäß der Erfindung eine deutlich höhere Reversionsbeständigkeit (je kleiner der Wert der Reversion, desto höher die Reversionsbeständigkeit) aufweisen als die Vergeichsmischung 1. Darüberhinaus ist ersichtlich, dass die erfindungsgemäßen Mischungen eine praktisch vergleichbare Verarbeitungssicherheit (gemessen an der t01-Zeit) zeigen wie die Vergleichsmischung 1.

Tabelle 3:

| Eigenschaften der Testvulkanisate nach Optimalheizung | | | |
|---|---|---|---|
| Mischungsnummer | Vergleich 1 | Erfindung 2 | Erfindung 3 |
| Vulkanisation: 150°C<br>Festigkeit (MPa) | 27 | 28 | 28 |

Tabelle 3: (fortgesetzt)

| Eigenschaften der Testvulkanisate nach Optimalheizung | | | |
|---|---|---|---|
| Mischungsnummer | Vergleich 1 | Erfindung 2 | Erfindung 3 |
| Bruchdehnung (%) | 570 | 590 | 590 |
| Modul 100 (MPa) | 2,1 | 2,1 | 2,2 |
| Modul 300 (MPa) | 10,1 | 9,6 | 9,7 |
| Weiterreissfestigkeit (N) | 78 | 69 | 63 |
| Härte bei 23°C (Shore A) | 62 | 63 | 64 |
| Elastizität bei 23°C (%) | 46 | 45 | 45 |
| Roelig 0°C | | | |
| tan delta | 0,232 | 0,242 | 0,234 |
| E' (MPa) | 9,108 | 9,879 | 9,632 |
| E" (MPa) | 2,114 | 2,385 | 2,254 |
| Roelig 60°C | | | |
| tan delta | 0,142 | 0,150 | 0,143 |
| E' (MPa) | 5,180 | 5,579 | 5,578 |
| E" (MPa) | 0,736 | 0,837 | 0,798 |
| Goodrich-Flexometer | | | |
| Fließen (%) | 5 | 11 | 8 |
| Innentemperatur (°C) | 138 | 136 | 133 |

Aus Tabelle 3 geht hervor, dass die Vulkanisate gemäß der Erfindung bei dynamischer Belastung (Goodrich-Flexometer-Test) eine niedrigere Innentemperatur aufweisen als das Vergleichsvulkanisat.

Tabelle 4:

| Eigenschaften der Testvulkanisate nach Überheizung | | | |
|---|---|---|---|
| Mischungsnummer | Vergleich 1 | Erfindung 2 | Erfindung 3 |
| Vulkanisation: 150°C/60 min | | | |
| Festigkeit (MPa) | 23 | 23 | 25 |
| Bruchdehnung (%) | 590 | 580 | 570 |
| Modul 100 (MPa) | 1,5 | 1,9 | 1,9 |
| Modul 300 (MPa) | 7,3 | 8,3 | 9,0 |
| Weiterreissfestigkeit (N) | 53 | 50 | 50 |
| Härte bei 23°C (Shore A) | 60 | 60 | 61 |
| Elastizität bei 23°C (%) | 44 | 38 | 42 |
| Roelig 0°C | | | |
| tan delta | 0,248 | 0,258 | 0,242 |
| E' (MPa) | 9,913 | 11,659 | 11,243 |
| E" (MPa) | 2,464 | 3,007 | 2,722 |
| Roelig 60°C | | | |
| tan delta | 0,178 | 0,175 | 0,158 |
| E' (MPa) | 4,981 | 5,648 | 5,767 |
| E" (MPa) | 0,855 | 0,986 | 0,913 |
| Goodrich-Flexometer | | | |
| Fließen (%) | 4 | 7 | 6 |
| Innentemperatur (°C) | 148 | 144 | 143 |

Aus Tabelle 4 geht hervor, dass nach Überheizung die Vulkanisate gemäß der Erfindung bei dynamischer

Belastung (Goodrich-Flexometer-Test) eine niedrigere Innentemperatur und eine günstigere Retention des Moduls aufweisen als das Vergleichsvulkanisat.

**Patentansprüche**

1. Polymere Schwefelverbindungen der Formel (I),

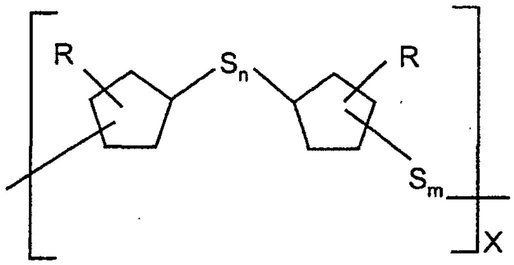

(I),

worin die Substituenten

R für Wasserstoff und/oder Methyl stehen,

n und m ganze oder gebrochene Zahlen im Bereich von 2 bis 12 und

x eine ganze oder gebrochene Zahl im Bereich von 2 bis 500 bedeuten.

2. Verfahren zur Herstellung der polymeren Schwefelverbindungen gemäß Anspruch 1 durch Umsetzung von Di-Cyclopentenylpolysufanen der Formeln (II), (III) und/oder (IV)

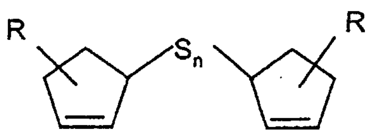

(II)

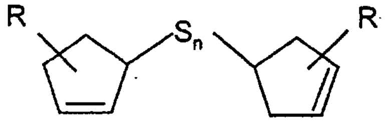

(III)

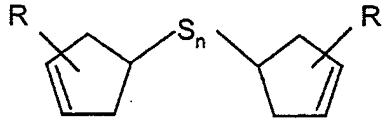

(IV),

worin R und n die in Formel (I) angegebene Bedeutung besitzen, mit Schwefel und Schwefelwasserstoff in Gegenwart von Aminen bei Temperaturen von 100 bis 180°C.

3. Verwendung der polymeren Schwefelverbindungen gemäß Anspruch 1 als Vulkanisationsmittel zur Herstellung von ungesättigten Kautschukvulkanisaten.

4. Verwendung der polymeren Schwefelverbindungen gemäß Anspruch 1 zur Herstellung von Gummiformkörpern.

5. Verwendung der polymeren Schwefelverbindungen gemäß Anspruch 1 zur Herstellung von Reifenbauteilen.

## Claims

1. Polymeric sulfur compounds of the formula (I)

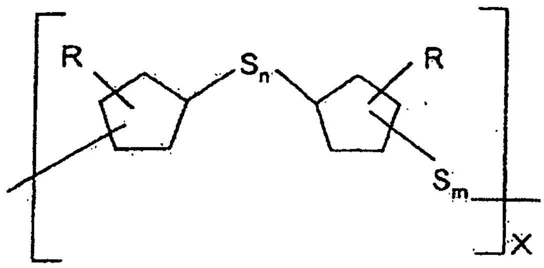

(I),

wherein the substituents

| | |
|---|---|
| R | represent hydrogen and/or methyl, |
| n and m | denote integral or non-integral numbers in the range from 2 to 12 and |
| x | denotes an integral or non-integral number in the range from 2 to 500. |

2. Process for the preparation of the polymeric sulfur compounds according to claim 1 by reaction of di-cyclopentenylpolysulfanes of the formulae (II), (III) and/or (IV)

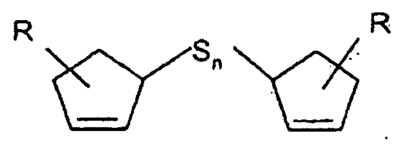

(II)

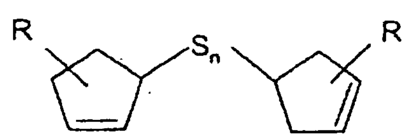

(III)

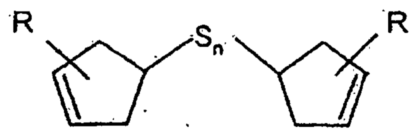

(IV),

wherein

R and n have the meaning given in formula (I),
with sulfur and hydrogen sulfide in the presence of amines at temperatures of 100 to 180°C.

**3.** Use of the polymeric sulfur compounds according to claim 1 as vulcanizing agents for the production of unsaturated rubber vulcanization products.

**4.** Use of the polymeric sulfur compounds according to claim 1 for the production of shaped rubber articles.

**5.** Use of the polymeric sulfur compounds according to claim 1 for the production of tyre components.

**Revendications**

**1.** Composés polymères du soufre de la formule (I),

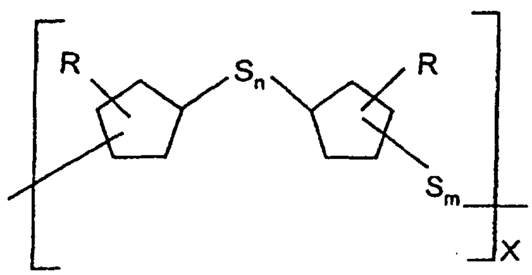

(I),

dans laquelle les substituants

R représente un hydrogène et/ou un méthyle,

n et m signifient des nombres entiers ou fractionnaires dans l'intervalle de 2 à 12, et

x signifie un nombre entier ou fractionnaire dans l'intervalle de 2 à 500.

**2.** Procédé de préparation des composés polymères du soufre selon la revendication 1 par réaction de di-cyclopenténylpolysulfanes des formules (II), (III) et/ou (IV)

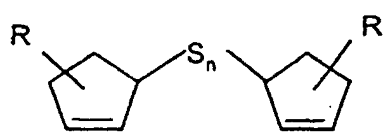

(II)

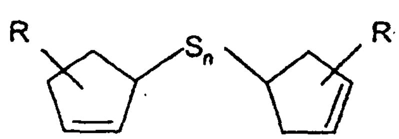

(III)

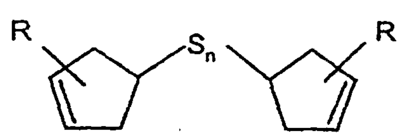

(IV),

dans lesquelles
R et n possèdent les significations données pour la formule (I),
avec du soufre et de l'hydrogène sulfuré en présence d'amines à des températures comprises entre 100 et 180 °C.

**3.** Utilisation des composés polymères du soufre selon la revendication 1 comme agents de vulcanisation pour la fabrication de vulcanisats de caoutchoucs insaturés.

**4.** Utilisation des composés polymères du soufre selon la revendication 1 pour la fabrication d'articles de caoutchouc moulé.

**5.** Utilisation des composés polymères du soufre selon la revendication 1 pour la fabrication d'éléments de pneumatiques.